# EUROPEAN PATENT APPLICATION

(11) **EP 1 364 864 A2**
(43) Date of publication of application: **26.11.2003**
(21) Application number: 03380107.7
(22) Date of filing: 06.05.2003
(51) Int. Cl.: B62K 9/02

(54) **Child's vehicle**

(30) Priority: 24.05.2002 ES 200201334 U
(71) Applicant: Rodriguez Martinez, S.C., 03440 Ibi, Alicante (ES)
(72) Inventor: Rodriquez Martinez, José Manuel, 03440 IBI (Alicante) (ES)
(74) Representative: Canadell-Isern, Roberto

(57) **Abstract**

**CHILD'S VEHICLE** shaped like a motorized jeep tricycle, made up of two hard plastic assembled parts forming the main body (1) that simulates the chassis of the vehicle in which the remaining parts of the vehicle are placed and joined in an integral but temporary way, thus enabling them to be replaced. Said chassis has an axle box on its front upper part capable of receiving the axle (3b) of the forks (3) at slant, the upper end of which is fastened by screwing to a annular element (8a) located on the lower central part of the handlebar structure (8). This includes a handle (8b) on both sides and the respective mirrors (8c), facilitating the overall turning of the handlebar (8) with the forks (3) and the front wheel (4). Meanwhile, the streamline (9) is fastened on the front part of the set by screwing.

## Description

### PURPOSE

The purpose of this patent Invention request is a child's vehicle that provides for the function for which it is intended various advantages to be detailed later on, apart from others inherent to its organization and constitution.

More specifically, the invention has designed a vehicle that adopts the shape of a motorized jeep tricycle, especially conceived so that it can be driven by a child over the age of three years. This vehicle is equipped with an electric motor supplied by rechargeable batteries.

### HISTORY

There are children's vehicles at present on the market consisting in cars, motorbikes and other vehicles supplied by batteries. These constitute cumbersome sets that are very heavy and have a sophisticated assembly.

### DESCRIPTION OF THE INVENTION

The child's vehicle, purpose of this invention includes, as a basic structural element, a plastic material body obtained from two injection parts simulating the set of the chassis of a motorized jeep tricycle, including the engine and the transmission, the simulated tank and the back wheels, the battery housing and serves as a support for a variety of parts making up the vehicle.

The association of said parts with respect to the basic element serving as their support is made in a simple way by an adult with the help of elemental tools such as a wrench and screwdriver.

The wheels of the vehicle are made of a single plastic part obtained by blowing.

The characteristics of the vehicle in question provide, amongst other advantages, a noticeable simplification in the fabrication process that favorably affects the costs, as well as giving said vehicles notable sturdiness, solidity and toughness in order to extend their useful life.

As indicated above, the vehicle purpose of the invention includes a battery and an electric motor connected through a circuit that opens and closes by means of a bipolar switch with three sides operated by an accelerator pedal pressed by the child. An electric brake has been provided so that when the accelerator pedal stops being pressed the vehicle automatically stops. One of the back wheels of the vehicle is operated by a transmission whilst the front wheel controlling the direction is operated by the handlebar controlled by the child.

An arrangement of two plugs connected respectively to the battery of the vehicle and to the wiring of the motor circuit establish the connection between said elements and, when unplugged, permit the battery to be recharged when the plug of the battery is connected to a third plug corresponding to the charger previously connected to the mains.

Assembly of the vehicle is made on the chassis of the streamline, the handlebar and the front wheel, and a seat covering the battery housing that is easily accessible.

In order to complement the description which follows and to help with a better understanding of the characteristics of the invention, this descriptive report includes a set of drawings in which the most significant details are represented in an illustrative but not limiting way.

### BRIEF DESCRIPTION OF THE DRAWINGS

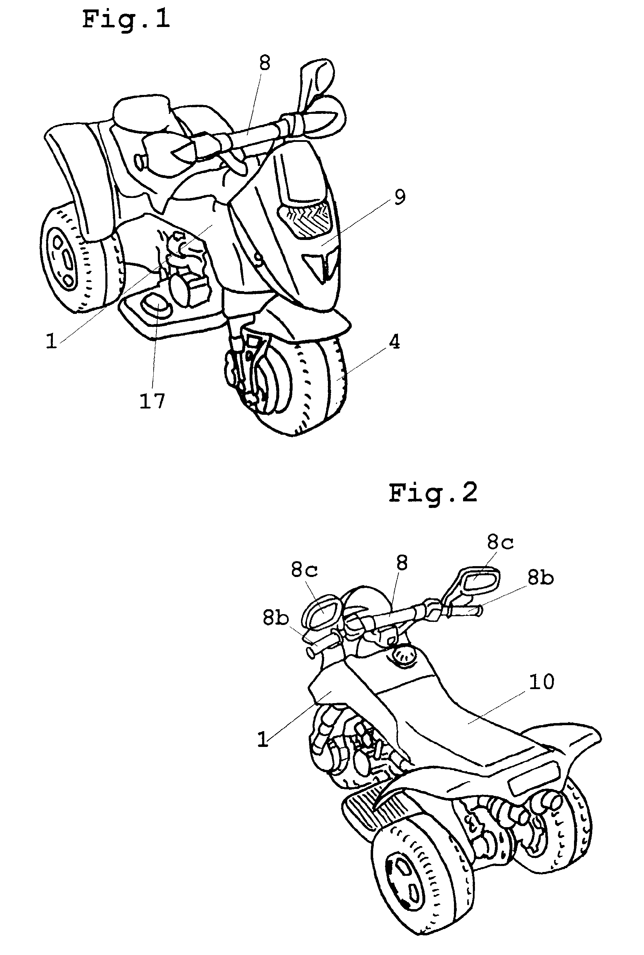

Figures 1 and 2 show perspective front and back views of the assembled vehicle.
Figures 3 to 9 show respective views relating to different assembly stages of the vehicle.
Figure 10 shows the vehicle's electrical circuit schematic diagram.
Figures 11 to 15 show illustrative views of how to recharge the vehicle's battery.

### PERFORMANCE EXAMPLE DESCRIPTION OF THE INVENTION

In view of the figures commented above and in accordance with the numbering used, a performance example of the invention can be seen. This consists of a child's vehicle made up of two assembled hard plastic parts constituting the main body -1-, simulating the chassis of the vehicle, on which the remaining parts of the vehicle are placed and joined.

Some parts of the vehicle are structural elements that help to give it the characteristic shape of a motorized jeep tricycle, whilst other parts or organs constitute functional elements for the movement, steering and control of the vehicle. In particular, these parts are unitary elements able to be replaced in the event of failure, thus giving the vehicle a practically unlimited useful life.

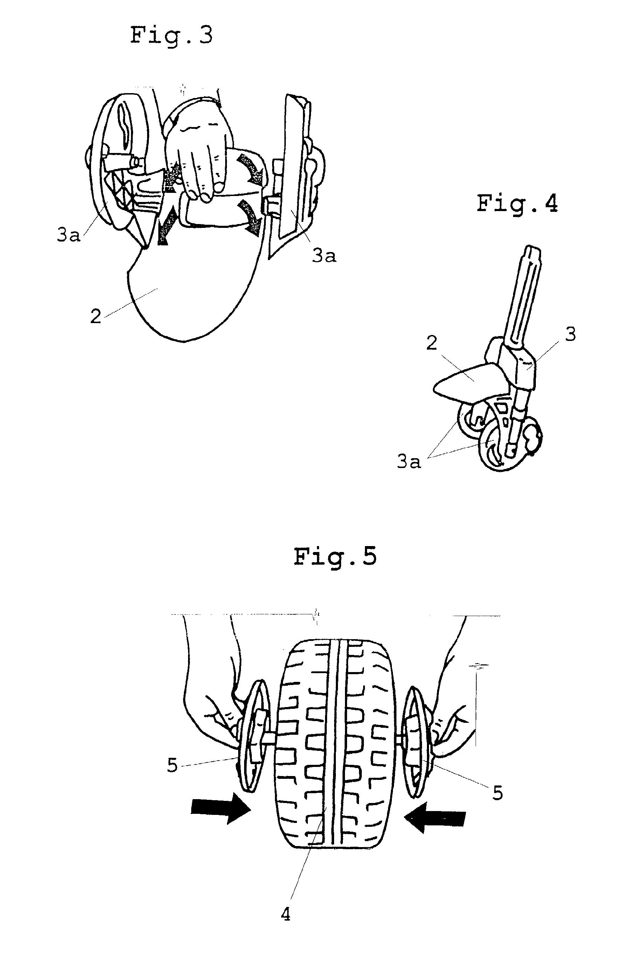

Assembly of the vehicle includes coupling of the front mudguard -3-under pressure to the hubcaps -3a- of the front wheel -4- (figure 3), which make up the ends of forks -3- (figure 4).

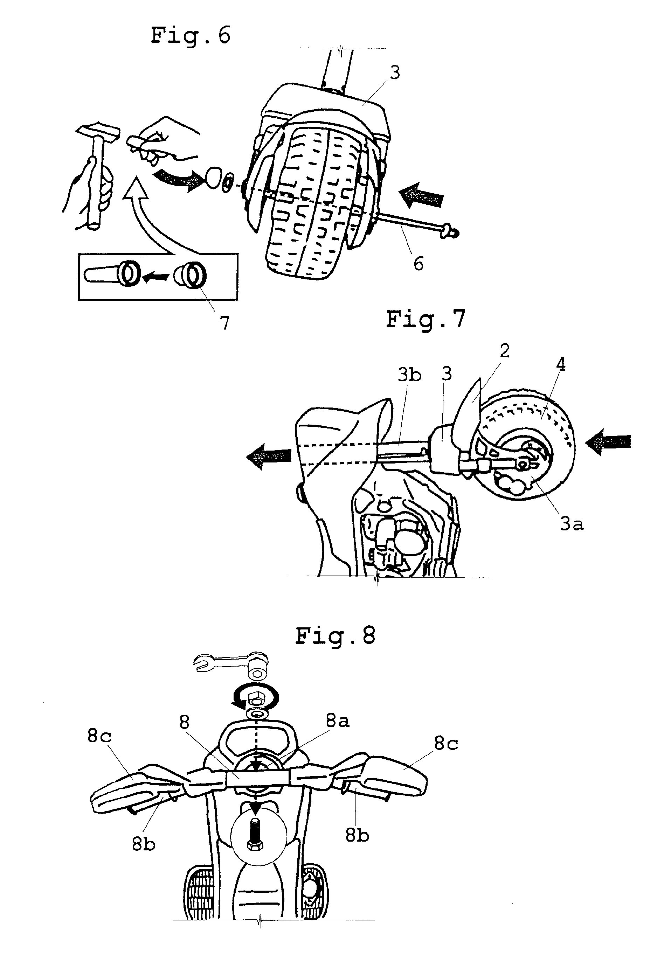

Two lids -5- (figure 5) are coupled on both sides of the front wheel -4-and are installed between the hubcaps -3a-. These can be rotated by means of an axle -6- passing through respective orifices of the set and are fastened by a useful cap -7- as indicated in figure 6.

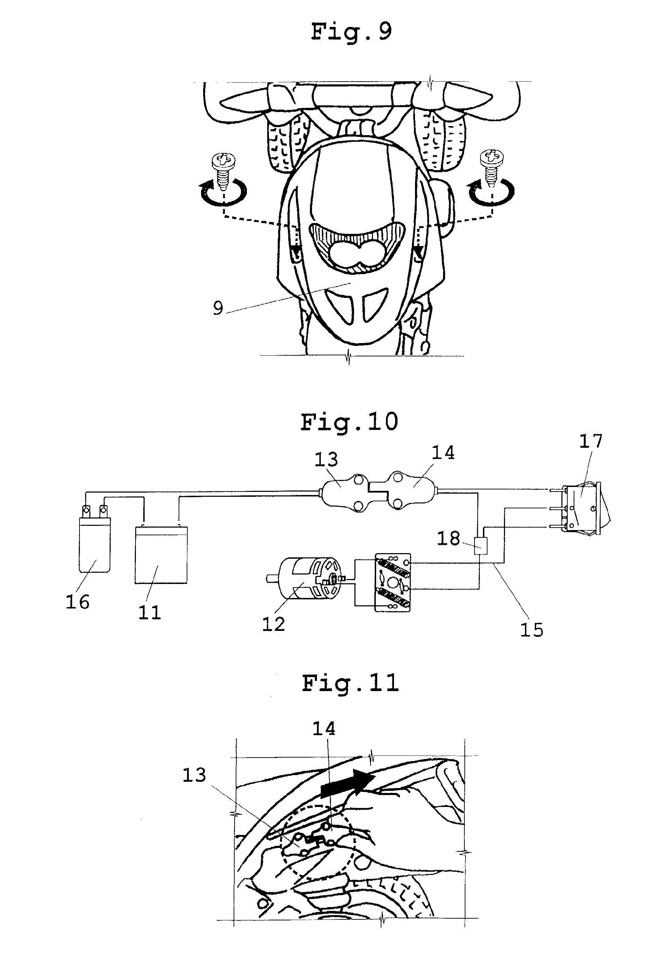

The chassis -1- has an axle box on its front upper part that receives the axle -3b- of the forks -3- (figure 3) at a slant, the upper end of which is fastened by screwing to a annular element -8a- located on the lower central part of the handlebar structure -8-. This includes a handle -8b- on both sides and the respective mirrors -8c-, facilitating the overall turning of the handlebar -8- with the forks -3- and the front wheel -4- (figure 8). Meanwhile, the streamline -9- is fastened on the front part of the set by screwing, as indicated in figure 9.

The chassis -1- has a seat -10-, able to be removed by unscrewing, that covers a housing for the battery -11-.

Figure 10 shows the electrical circuit diagram of the vehicle, including the battery -11- and motor -12-; the plug -13- connected to the battery -11- and the plug -14- connected to the wiring -15-, both interconnected in the functional position of the vehicle; the circuit breaker -16-; the accelerator -17- located on the right footrest of the chassis that works on two cutoff buttons of the electrical circuit to allow the electric supply current of the motor -12- to pass through. This, on going through the corresponding transmission, operates the back propelling wheel of the vehicle, Finally, an electric brake -18- that, on lifting the foot off the accelerator -17-, ensures the vehicle automatically stops.

Figures 11 to 15 show recharging of the battery -11-, which is carried out by accessing the back side part of the vehicle underneath one of the mudguards of the back wheels.

Figure 11 indicates disconnecting of the plug -13- of the battery -11-from the plug -14- of the wiring -15-.

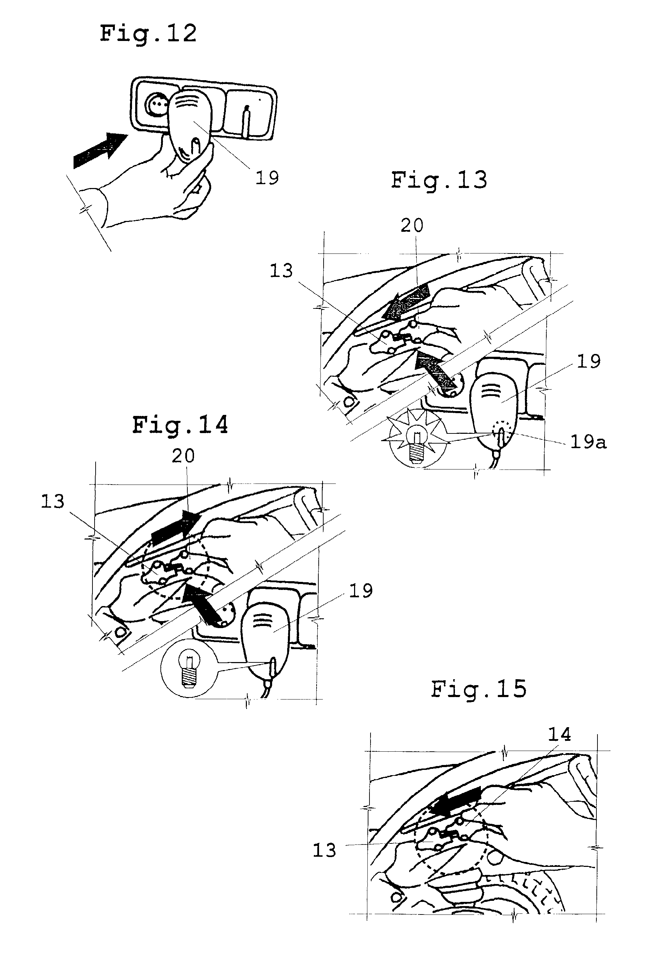

Figure 12 shows how the charger -19- is connected to the mains.

Figure 13 shows the connection of the plug -20- of the charger -19- to the plug -13- of the battery -11-. The pilot light -19a- of the charger -19- will turn off indicating the battery is being charged, whilst when the pilot light comes on again the battery is charged.

Figure 14 shows how, once the battery -1- is charged, the plug -20- is disconnected from the charger -19- of the vehicle's battery and the charger is disconnected from the mains.

Figure 15 shows connection of the plug -14- of the wiring -15- to the plug -13- of the battery -11-.

Therefore, a first objective of the invention is to obtain a vehicle that faithfully reproduces the shape of a motorized jeep tricycle with the advantages of reducing fabrication costs and increasing its sturdiness, thanks to its main body -1- made up of two injected plastic material parts, as well as incorporating front and back wheels made up of a single part obtained by blowing that have the shape of the lining and rim.

A second objective of the invention is to obtain a vehicle intended to be driven by a child, which includes means for its movement, steering, parts similar to the overall design and location of a real vehicle, but sufficient simplified so that they are easily assimilable for a child over three years.

## Claims

1. CHILD'S VEHICLE, of the type shaped like a motorized jeep tricycle that includes an electric motor supplied by a rechargeable battery installed in a housing eventually enclosed by the vehicle's seat; an operative accelerator arranged to work on two cutoff buttons of the electrical circuit to operate the motor; an electric brake that stops the vehicle when the foot is taken off said accelerator; and a transmission to move the propelling back wheel of the vehicle. The vehicle is **characterized by** the fact it is made up of two hard plastic assembled parts shaping the main body that simulates the chassis of the vehicle in which the remaining parts of the vehicle are placed and joined in an integral but temporary way, thus enabling them to be replaced. Said chassis has an axle box on its front upper part capable of receiving the axle (3b) of the forks (3) at slant, the upper end of which is fastened by screwing to a annular element (8a) located on the lower central part of the handlebar structure (8). This includes a handle (8b) on both sides and the respective mirrors (8c), facilitating the overall turning of the handlebar (8) with the forks (3) and the front wheel (4). Meanwhile, the streamline (9) is fastened on the front part of the set by screwing.

2. CHILD'S VEHICLE, according to claim 1, **characterized by** the fact coupling under pressure of the front mudguard (2) to hubcaps (3a) of the front wheel (4) has been provided for. The hubcaps make up the ends of the forks (3) and two lids (5) are joined to the sides of said front wheel (4) and are received between the hubcaps (3a), which can be rotated by means of an axle (6) passing through respective orifices of the set and are fastened by a cap (7).
